# EUROPEAN PATENT APPLICATION

(11) **EP 1 759 797 A1**
(43) Date of publication of application: **07.03.2007**
(21) Application number: 05019261.6
(22) Date of filing: 05.09.2005
(51) Int. Cl.: B23D 59/00

(54) **Cutting line indicator**

(71) Applicant: Quarton Inc., Hsi-Chih Taipei Hsien (TW)
(72) Inventor: Jan, Der-Shyang, Taipei 112 (TW); Huang, Cheng-Hsiung, Sijhih City Taipei County 221 (TW); Hsiao, Ching-Horng, Shalu Township Taichung County 433 (TW)
(74) Representative: Haft, Uwe Michael

(57) **Abstract**

A cutting line indicator (100) is adapted to be installed on a circular sawing blade (202) of a sawing machine (204) to produce a line-shaped beam to delineate the cutting line of the circular sawing blade (202). The cutting line indicator (100) has a light source (150) for generating a light beam (206) that forms the line-shaped beam, a lower cover (110) that is made from a first metal plate, and a spindle (120) received in the lower cover (110), with the spindle (120) being made from a second metal plate. An inner housing (130) is arranged on the lower cover (110), with the light source (150) coupled to the inner housing (130). An upper cover is coupled to enclose the lower cover (110).

## Description

### BACKGROUND OF THE INVENTION

### 1. Field of the Invention

The present invention relates to a cutting line indicator, and in particular, to a cutting line indicator which can be manufactured with metal plates.

### 2. Description of the Prior Art

It is a common practice when cutting wood, for example, with a sawing machine, that the operator is required to lower the operation arm of the sawing machine to align the cutting line. This is because the operator cannot identify the actual cutting position of the circular sawing blade of a sawing machine, and is lowering the operation arm to avoid a large error which would result in a waste of materials or a poor-quality cut. The operation described above (lowering the operation arm) is not only inconvenient, but also fails to meet the demands of modern technology.

It has been suggested to provide cutting line indicators with laser beams or other light sources that function to delineate the cutting line of a circular sawing blade, so as to save operation time and to enhance the quality of the cut. Examples of such devices are illustrated in U.S. Patent No. 5,862,727 ("Laser Arbor"), U.S. Patent No. 6,035,757 ("Circular Saw Cut Alignment Device"), and U.S. Patent No. 6,755,107 ("Miter Saw Having a Light Beam Alignment System"), which disclose cutting line indicators equipped on the spindle of a circular sawing blade. When the sawing blade rotates, the indicator can generate a line-shaped laser beam to delineate the cutting line.

Unfortunately, these conventional cutting line indicators suffer from a number of drawbacks. For example, these cutting line indicators have a complicated structure and provide insufficient functions. In addition, most of these conventional cutting line indicators have components (e.g., housing) that are produced using a lost-wax casting process because they are subjected to torsion as a result of being secured on the spindle of a circular sawing blade. In this regard, the lost-wax casting process and a stamping process are different processes that can be used to manufacture products that are made of metals. Production using the lost-wax casting process is more expensive than production using a stamping process because the lost-wax casting process is more complex and cannot be accomplished using automation. Thus, the production cost for these conventional cutting line indicators is high, and they are not conducive to mass production. In addition, sand holes of the semi-finished products of a lost-wax process are so large that the failure rate of electroplating is higher than for other products.

### SUMMARY OF THE DISCLOSURE

It is an object of the present invention to provide a cutting line indicator having some parts (i.e., the parts that are subjected to torsion) manufactured with metal plates to avoid the use of the lost-wax casting process.

It is another object of the present invention to provide a cutting line indicator having a recess that is provided to accommodate a laser module for generating a laser beam. The recess has at least one rib to allow for adjustment of the inclination of the laser beam.

In order to accomplish the objects of the present invention, there is provided a cutting line indicator that is adapted to be installed on a circular sawing blade of a sawing machine to produce a line-shaped beam to delineate the cutting line of the circular sawing blade. The cutting line indicator has a light source for generating a light beam that forms the line-shaped beam, a lower cover that is made from a first metal plate, and a spindle received in the lower cover, with the spindle being made from a second metal plate. An inner housing is arranged on the lower cover, with the light source coupled to the inner housing. An upper cover is coupled to enclose the lower cover.

In an alternative embodiment of the present invention, the inner housing is provided with a recess to accommodate the light source, the recess having at least a rib for adjusting the inclination of the light source with respect to the lower cover.

### BRIEF DESCRIPTION OF THE DRAWINGS

FIG. 1 is a perspective view of a cutting line indicator in accordance with one embodiment of the present invention.
FIG. 2 is an exploded perspective view of the cutting line indicator of FIG. 1.
FIG. 3 is an exploded perspective view of the rhomboid lens of the cutting line indicator of FIG. 1.
FIG. 4 is an exploded perspective view of the laser module of the cutting line indicator of FIG. 1.
FIG. 5 is a front plan view illustrating the cutting line indicator of FIG. 1 in use with a conventional miter saw.
FIG. 6 is a exploded perspective view illustrating a bracket for use in securing the cutting line indicator of FIG. 1 on a spindle of a sawing machine.
FIG. 7 is a block diagram of an IR transmitting circuit and an IR receiving circuit that can be used to operate the cutting line indicator of FIG. 1.

### DETAILED DESCRIPTION OF THE PREFERRED EMBODIMENTS

The following detailed description is of the best presently contemplated modes of carrying out the invention. This description is not to be taken in a limiting sense, but is made merely for the purpose of illustrating general principles of embodiments of the invention. The scope of the invention is best defined by the appended claims.

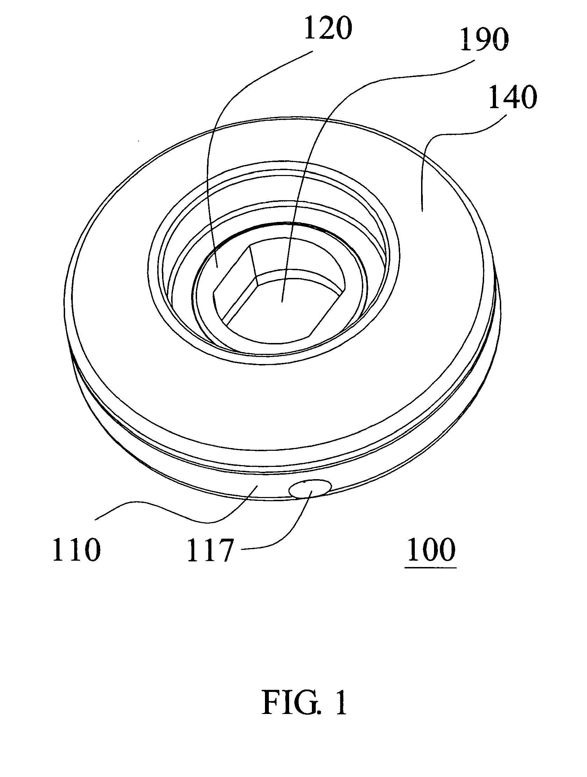

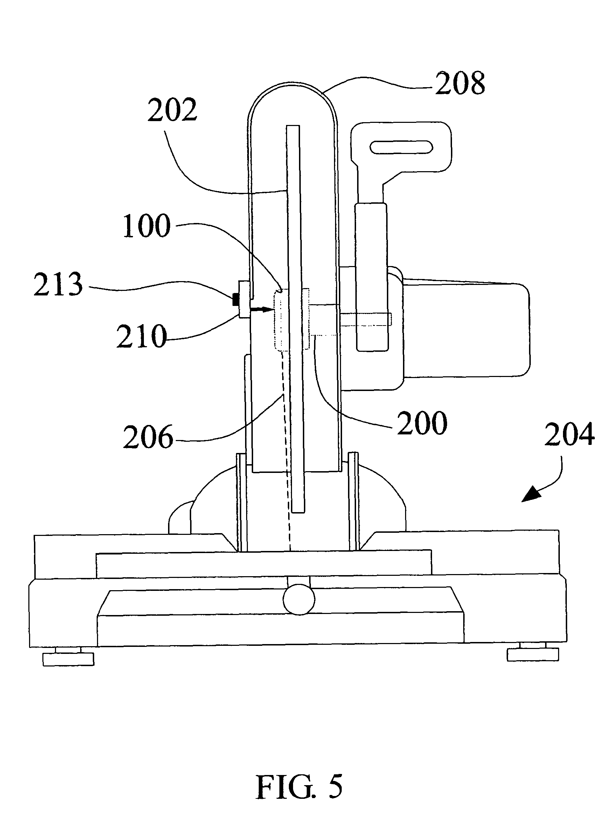

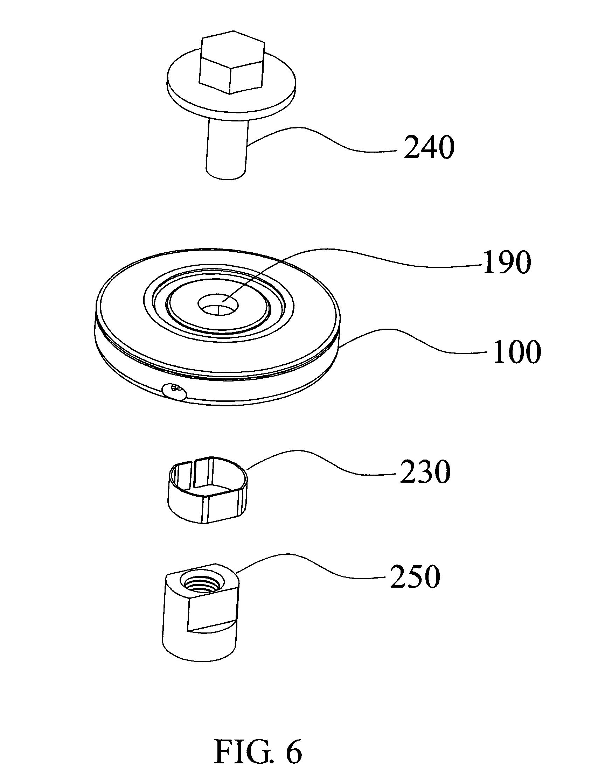

FIGS. 1-4 illustrate a cutting line indicator 100 in accordance with one embodiment of the present invention. Referring first to FIG. 5, the cutting line indicator 100 is secured on the spindle 200 of the circular sawing blade 202 of a sawing machine 204 (e.g., a miter saw) by a screw 240 (see FIG. 6) after the spindle 200 is inserted into a center hole 190 (see FIG. 1) when the cutting line indicator 100 is operated. Consequently, a light beam 206 is generated through a light exit window 117 (see FIG. 1), with the beam 206 capable of delineating the cutting line of the circular sawing blade 202.

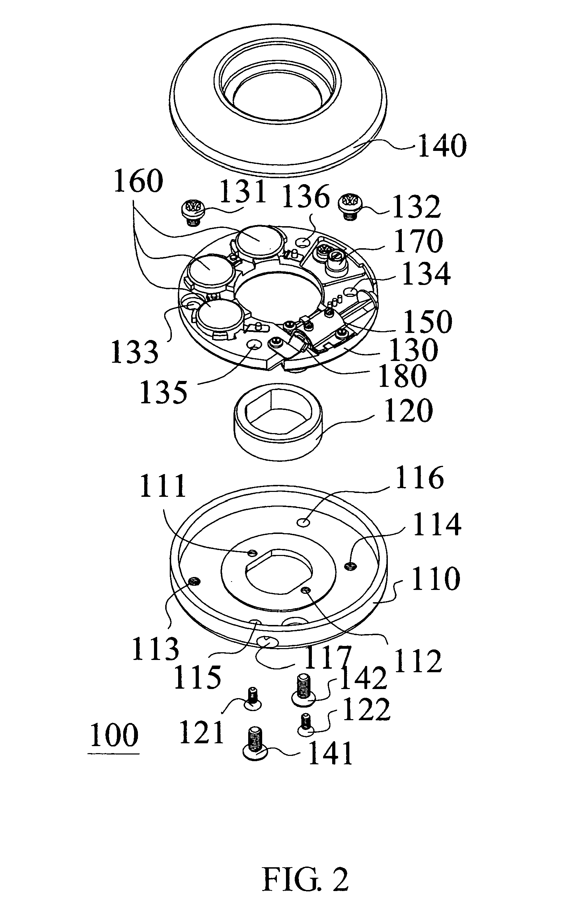

Referring to FIGS. 1 and 2, the cutting line indicator 100 includes a lower cover 110, a spindle 120, an inner housing 130, and an upper cover 140. The lower cover 110 and the upper cover 140 form the overall housing for the cutting line indicator 100 and define the center hole 190, with the components of the cutting line indicator 100 retained therein. The spindle 120 is secured on the lower cover 110 by screws 121 and 122 which are inserted through holes 111 and 112, respectively, in the lower cover 110. The inner housing 130 is also secured on the lower cover 110 by screws 131 and 132 which are inserted through holes 133 and 134, respectively, in the inner housing 130 and then screwed into screw holes 113 and 114, respectively, in the lower cover 110. The upper cover 140 is secured on the lower cover 110 by screws 141 and 142 which are inserted through holes 115 and 116, respectively, in the lower cover 110 and holes 135 and 136, respectively, in the inner housing 130.

The lower cover 110 and the spindle 120 are subjected to torsion resulting from a screw which is used to secure the cutting line indicator 100 on a circular sawing blade. In order to (i) withstand the torsion resulting from the securing force, (ii) minimize production cost, and (iii) facilitate mass production, the lower cover 110 and the spindle 120 are both made from a metal plate that is formed by a stamping process. Specifically, the lower cover 110 is manufactured with a first metal plate (e.g., a galvanized iron sheet) by a stamping process and the spindle 120 is manufactured with a second metal plate (e.g., a galvanized iron sheet) by a stamping process that can be the same as the stamping process for the first metal plate. For example, the first and second metal plates can be a galvanized iron sheet, and the thickness of the second metal plate is preferably larger than that of the first metal plate. By providing both the lower cover 110 and the spindle 120 in the form of a metal plate that is formed by a stamping process, the present invention avoids the use of the lost-wax casting process, thereby allowing the manufacture to be automated so as to reduce the costs.

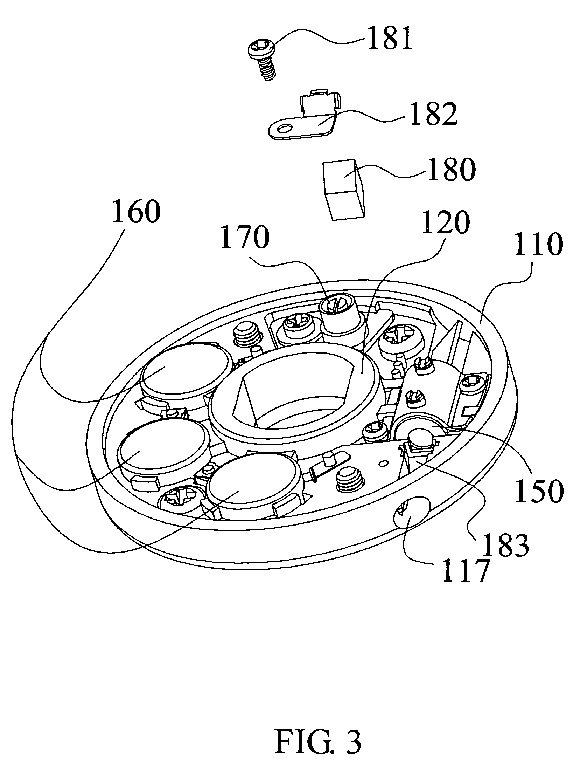

Furthermore, since the inner housing 130 and the upper cover 140 are not subjected to torsion, they do not need to be made of metal, and instead can be made with plastics and manufactured using a mold injection process. Referring also to FIG. 3, the inner housing 130 is also provided with a structure to accommodate a laser module 150 (acting as a light source), batteries 160, a centrifugal switch 170, and a rhomboid lens 180 that together function to produce a line-shaped beam 206.

The batteries 160 provide the power for the laser module 150 to generate a laser beam. The centrifugal switch 170 is electrically connected to the batteries 160 whose power can be conducted through the laser module 150 as the circular sawing blade 202 rotates and in turn actuates the rotation of the cutting line indicator 100, with the supply of power from the batteries 160 being cut off when the circular sawing blade 202 stops rotating. The rhomboid lens 180 is secured in a recess 183 (as shown in FIG. 3) in the inner housing 130 by a screw 181 and a fixing plate 182. The rhomboid lens 180 changes the advancing direction of the laser beam generated by the laser module 150, rendering the laser beam generated from the laser module 150 closer to the circular sawing blade 202.

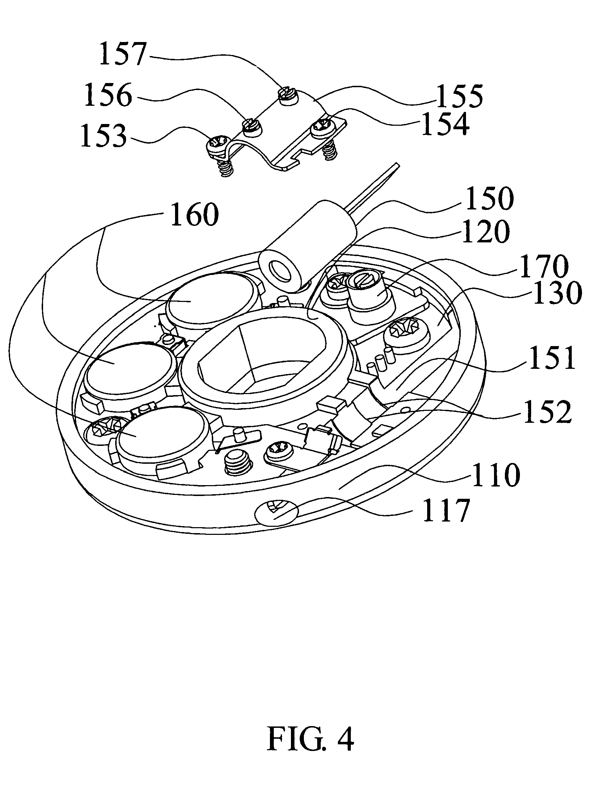

Referring to FIG. 4, the inner housing 130 is provided with a recess 151 to accommodate the laser module 150. The recess 151 is provided with at least one rib 152 that acts as a pivot for adjusting the inclination of the laser module 150. Additional ribs similar to rib 152 can also be provided in the recess 151. Adjusting the inclination of the laser module 150 will in turn adjust the laser beam generated by the laser module 150 to correctly point to the cutting line of a circular sawing blade 202 (i.e., the contacting edge between a circular sawing blade 202 and a work piece). As shown in FIG. 4, the laser module 150 is first secured in the recess 151 by screws 153 and 154 that extend through an arcuate fixing plate 155, with the fixing plate 155 acting to cover and secure the laser module 150. Then, the laser module 150 can be made to tilt in opposite directions by adjusting the screws 156 and 157. Consequently, the laser beam generated by the laser module 150 can be directed to the desired cutting line of a circular sawing blade 202.

Referring to FIG. 6, a bracket 230 can be positioned around the spindle 200 of the sawing machine 204 to fit the center hole 190 of the cutting line indicator 100 when the size of the spindle 200 is smaller then the size of the center hole 190. The screw 240 is inserted through the center hole 190 and then screwed into the spindle 200. Thus, by providing a set of brackets 230 that have different sizes, the cutting line indicator 100 can be secured on a variety of different sawing machines 204.

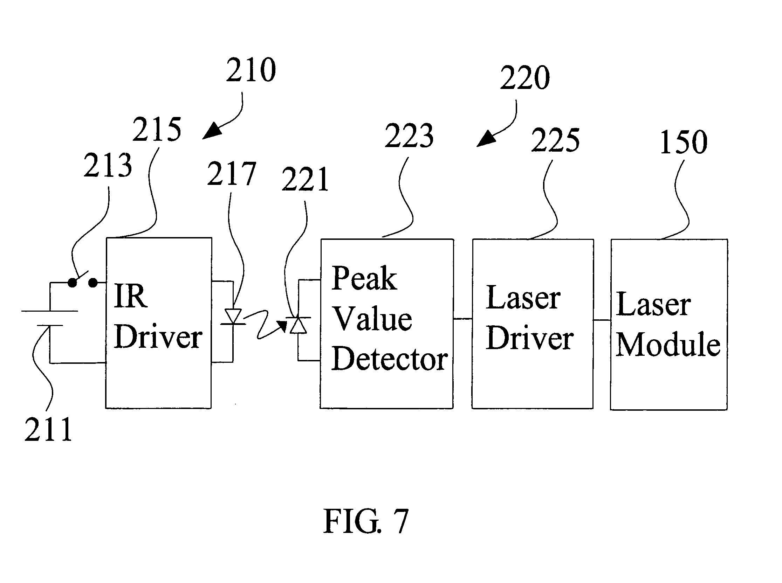

As described above, the centrifugal switch 170 is used to conduct the power of the batteries 160 through the laser module 150 as the circular sawing blade 202 rotates, thereby actuating the rotation of the cutting line indicator 100. As an alternative, the centrifugal switch 170 can be replaced with an infra-red (IR) transmitting circuit 210 and an IR receiving circuit 220 as shown in FIG. 7. The IR transmitting circuit 210 includes a battery 211, a switch 213, an IR driver 215 and an IR LED (Light Emitting Diode) 217. The IR LED 217 emits infrared light when the switch 213 is turned on and the power of the battery 211 is supplied to the IR driver 215. The IR receiving circuit 220 includes an IR receiver 221, a peak value detector 223 and a laser driver 225. The peak value detector 223 detects a peak value of the infrared light received by the IR receiver 221, converts the received infrared light into a voltage signal, and then transmits the voltage signal to the laser driver 225 to drive the laser module 150 for emitting the laser beam.

Referring to FIG. 5, the IR transmitting circuit 210 can be attached to a protection cover 208 for the sawing machine 204, and the IR receiving circuit 220 can be secured inside the cutting line indicator 100. The user can turn on the switch 213 for emitting infrared light when the user desires to operate the sawing machine 204, and then the laser beam is emitted for forming the line-shaped beam 206 after the IR receiver 221 receives the infrared light. Otherwise, the user can turn off the switch 213 if the user wants to stop the operation of the sawing machine 204.

While the description above refers to particular embodiments of the present invention, it will be understood that many modifications may be made without departing from the spirit thereof. The accompanying claims are intended to cover such modifications as would fall within the true scope and spirit of the present invention.

## Claims

1. A cutting line indicator adapted to be installed on a circular sawing blade of a sawing machine to produce a line-shaped beam to delineate the cutting line of the circular sawing blade, comprising:
a light source for generating a light beam that forms the line-shaped beam;
a lower cover that is made from a first metal plate;
a spindle received in the lower cover, the spindle being made from a second metal plate;
an inner housing arranged on the lower cover, with the light source coupled to the inner housing; and
an upper cover coupled to enclose the lower cover.

2. The indicator of claim 1, wherein the first and second metal plates are galvanized iron sheets.

3. The indicator of claim 1, wherein the inner housing and the upper cover are made with plastics.

4. The indicator of claim 1, wherein the thickness of the second metal plate is greater than that of the first metal plate.

5. The indicator of claim 1, wherein the light source is a laser module which is received in a recess provided on the inner housing.

6. The indicator of claim 5, wherein the recess is provided with at least one rib for adjusting the inclination of the laser module with respect to the lower cover.

7. The indicator of claim 5, further comprising a rhomboid lens arranged in front of the laser module to change the advancing direction of the light beam.

8. The indicator of claim 7, wherein the rhomboid lens is secured on the lower cover by a fixing plate.

9. The indicator of claim 1, further comprising a battery coupled to the light source to power the light source.

10. The indicator of claim 9, further comprising a centrifugal switch arranged on the inner housing to conduct the electric power of the battery to the light source when the circular sawing blade rotates.

11. The indicator of claim 1, wherein the upper cover and the lower cover together define a center hole, and wherein the indicator further comprises a bracket fitted in the center hole for securing the indicator on a spindle of the sawing machine.

12. The indicator of claim 1, further comprising an IR transmitting circuit for emitting infrared light.

13. The indicator of claim 12, wherein the IR transmitting circuit includes a battery, a switch, an IR driver and an IR LED.

14. The indicator of claim 12, further comprising an IR receiving circuit for receiving the infrared light and turning on the light source.

15. The indicator of claim 14, wherein the IR receiving circuit includes an IR receiver, a peak value detector and a light source driver.

16. A cutting line indicator adapted to be installed on a circular sawing blade of a sawing machine to produce a line-shaped beam to delineate the cutting line of the circular sawing blade, comprising:
a light source for generating a light beam that forms the line-shaped beam;
a lower cover;
a spindle received in the lower cover;
an inner housing arranged on the lower cover and provided with a recess to accommodate the light source, the recess having at least a rib for adjusting the inclination of the light source with respect to the lower cover; and
an upper cover coupled to enclose the lower cover.

17. The indicator of claim 16, further comprising a rhomboid lens arranged in front of the light source to change the advancing direction of the light beam.

18. The indicator of claim 17, wherein the rhomboid lens is secured on the lower cover by a fixing plate.

19. The indicator of claim 16, further comprising a battery coupled to the light source to power the light source.

20. The indicator of claim 19, further comprising a centrifugal switch arranged on the inner housing to conduct the electric power of the battery to the light source when the circular sawing blade rotates.

## Amended claims

### Amended claims in accordance with Rule 86(2) EPC.

**1.** A cutting line indicator adapted to be installed on a circular sawing blade (202) of a sawing machine (204) to produce a line-shaped beam (206) to delineate the cutting line of the circular sawing blade (202), comprising:
a light source (150) for generating a light beam that forms the line-shaped beam (206);
a lower cover (110) that is made from a first metal plate;
a coupler (120) received in the lower cover (110) and being made from a second metal plate;
an inner housing (130) arranged on the lower cover (110), with the light source (150) coupled to the inner housing (130); and
an upper cover (140) coupled to enclose the lower cover (110), **characterized by** the coupler (120) being secured to the lower cover (110) and being secured to the sawing blade (202),
the inner housing (130) being secured to the lower cover (110) and the upper cover (140) being secured to the lower cover (110).

**2.** The indicator of claim 1, **characterized by** the first and second metal plates are galvanized iron sheets.

**3.** The indicator according to claim 1 or 2, **characterized by** the inner housing (130) and the upper cover (140) are made of plastics.

**4.** The indicator according to one of the claims 1 to 3, **characterized by** the thickness of the second metal plate being greater than that of the first metal plate.

**5.** The indicator according to one of the claims 1 to 4, **characterized by** the light source (150) is a laser module which is received in a recess (151) provided on the inner housing (130).

**6.** The indicator according to claim 5, **characterized by** the recess (151) being provided with at least one rib (152) for adjusting the inclination of the laser module with respect to the lower cover (110).

**7.** The indicator according to claim 5 or 6, **characterized by** a rhomboid lens (180) arranged in front of the laser module to change the advancing direction of the light beam.

**8.** The indicator according to claim 7, **characterized by** the rhomboid lens (180) is secured on the inner housing (130) by a fixing plate (182).

**9.** The indicator according to one of the claims 1 to 8, **characterized by** a battery (160) for the supply of the light source (150).

**10.** The indicator according to claim 9, **characterized by** a centrifugal switch (170) arranged on the inner housing (130) to conduct the electric power of the battery (160) to the light source (150) when the circular sawing blade (202) rotates.

**11.** The indicator according to one of the claims 1 to 10, **characterized by** the upper cover (140) and the lower cover (110) together define a center hole (190) and the indicator further comprises a bracket (230) fitted in the center hole (190) for securing the indicator on a spindle (200) of the sawing machine (204).

**12.** The indicator according to one of the claims 1 to 11, **characterized by**, an IR transmitting circuit (210) for emitting infrared light.

**13.** The indicator according to claim 12, **characterized by** the IR transmitting circuit (210) includes a battery (211), a switch (213), an IR driver (215) and an IR LED (217).

**14.** The indicator according to claim 12 or 13, **characterized by** an IR receiving circuit (220) for receiving the infrared light and turning on the light source (150).

**15.** The indicator according to claim 14, **characterized by** the IR receiving circuit (220) includes an IR receiver (221), a peak value detector (223) and a light source driver (225).
